# EUROPEAN PATENT APPLICATION

(11) **EP 4 730 814 A1**
(43) Date of publication of application: **22.04.2026**
(21) Application number: 25208998.2
(22) Date of filing: 15.10.2025
(51) Int. Cl.: H04N 21/238, H04L 65/75

(54) **REDUCING PACKET FRAGMENTATION BY ADJUSTING MEDIA STREAM TARGET BITRATE**

(30) Priority: 21.10.2024 US 202418921772
(71) Applicant: Google LLC, Mountain View, CA 94043 (US)
(72) Inventor: HOROWITZ, Michael, Mountain View, 94043 (US); SPRANG, Erik, 111 22 Stockholm (SE)
(74) Representative: Thorniley, Peter

(57) **Abstract**

A method includes identifying, by a processor, a media stream comprising a sequence of encoded video frames and estimating, in the sequence of video frames, a share of video frames that are fragmented into respective pluralities of network packets, wherein each plurality of network packets comprises a network packet having a size below a predefined packet threshold size. Whether the share exceeds a predefined threshold value is determined and responsive to determining that the share exceeds a predefined threshold value, a target bitrate of the video stream is reduced.

## Description

### TECHNICAL FIELD

Aspects and implementations of the disclosure relate to packet switched networks, and more specifically, to reducing packet fragmentation by adjusting media stream target bitrate.

### BACKGROUND

A packet switched network is a digital network that transmits data by breaking the data into smaller units, called packets, and sending them to their destination through a series of nodes, sometimes referred to as switches. The packets are typically made up of a header and a payload. The header can include details such as the source and destination IP address(es). The payload can include the desired data (e.g., encoded video frames).

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor to delineate any scope of the particular implementations of the disclosure or any scope of the claims. Its sole purpose is to present some concepts of the disclosure in a simplified form as a prelude to the more detailed description that is presented later.

An aspect of the disclosure provides a method that identifies, by a processor, a media stream comprising a sequence of encoded video frames and estimates, in the sequence of video frames, a share of video frames that are fragmented into respective pluralities of network packets, wherein each plurality of network packets comprises a network packet having a size below a predefined packet threshold size. The method further determines whether the share exceeds a predefined threshold value and responsive to determining that the share exceeds a predefined threshold value, a target bitrate of the video stream is reduced.

A further aspect of the disclosure provides a system comprising: a memory; and a processing device, coupled to the memory, the processing device to perform a method according to any aspect or implementation described herein.

A further aspect of the disclosure provides a non-transitory computer-readable medium comprising instructions that, responsive to execution by a processing device, cause the processing device to perform operations according to any aspect or implementation described herein.

### BRIEF DESCRIPTION OF THE DRAWINGS

Aspects and implementations of the disclosure will be understood more fully from the detailed description given below and from the accompanying drawings of various aspects and implementations of the disclosure, which, however, should not be taken to limit the disclosure to the specific aspects or implementations, but are for explanation and understanding.
**FIG. 1** illustrates an example system architecture, in accordance with an implementation of the disclosure.
**FIG.** 2 depicts a flow diagram of a method for dynamically adjusting a media stream's target bitrate to minimize packet fragmentation, in accordance with implementations of the disclosure.
FIG. 3 depicts another flow diagram of a method for dynamically adjusting a media stream's target bitrate to minimize packet fragmentation, in accordance with implementations of the disclosure.
**FIG.** 4 is a block diagram illustrating an exemplary computer system, in accordance with an implementation of the disclosure.

### DETAILED DESCRIPTION

A media stream can be transmitted over a packet-switched network, which can be characterized by a maximum transmission unit (MTU). The MTU is the size of the payload and the header of a packet. When the number of bytes in the payload plus header(s) exceeds the MTU, the payload (e.g., an encoded video frame) can be fragmented such that it is packaged into two or more packets. The packets can then be reassembled by the receiving party into the corresponding encoded frame. However, such fragmentation can be undesirable since it increases the probability of packet loss, increases the header overhead, and increases the packet rate (i.e., the number of packets sent per second) of the media stream.

In an illustrative example, if the MTU is 1,492 bytes and a bitrate allocated to a video frame is such that the encoded frame plus corresponding header(s) require slightly more than 1,492 bytes, the frame can be fragmented into a first MTU-sized 1,492-byte packet and a second smaller packet, referred to as a "residual packet." The bitrate, which can be measured in bits-per-second (bps), is the rate at which bits are processed or transmitted, while the frame rate, which can be measured in frames per second, is the frequency at which consecutive frames are displayed.

In another illustrative example, an application can limit the size of the packet payload to a target value that is less than the MTU size, in order to accommodate the headers and possible overrun of the target size (e.g., the maximum of 1,200 bytes of payload can be used with a 1,492 MTU). In this example, if an encoded video frame includes slightly more bytes than the target payload size, an application may place the bytes of the encoded video frame into two packets, such that the first packet would have the payload containing approximately the target number (e.g., 1,200), while the second (residual) packet would have a smaller payload. In this case, the presence of the second (residual) packet increases the probability of loss (if either packet is lost, the entire frame is lost), increases the header overhead (the smaller payload of the second packet is accompanied by a full-size header), and increases the packet rate of the media stream. Accordingly, such fragmentation can result in a poor viewing experience of the user (e.g., latency, missed content, etc.), as well as an increased computing resource consumption.

Aspects and implementations of the present disclosure address these and other shortcomings of the existing technology by adjusting the media stream target bitrate to minimize the packet fragmentation. In particular, the system of the present disclosure can select a subset of video frames from a streamed media item ("media stream"). The streamed media item can be, for example, a portion of a video conference and the subset can include a sequence of encoded video frames sent for consumption by a receiving device. The system can then determine how many frames in the subset of frames are fragmented. If the share of fragmented frames satisfies a fragmentation threshold criterion (e.g., is greater than a threshold value), the system then determines the share of residual packets whose size satisfies a small-residual threshold criterion (e.g., is smaller than a threshold value). For example, the residual packet size threshold value can be one tenth of the network's MTU (e.g., 150 bytes in a 1,500 MTU network). If the share of residual packets exceeds a high small-packet threshold value (thus suggesting that a relatively high number of residual packets have a relatively small size) the system can reduce the target bitrate of the media stream such that the share of residual packets would be maintained below a low small-packet threshold value. The low small-packet threshold value can be lower than or equal to the high small-packet threshold value, and can reflect a desired or acceptable share of small residual packets during the transmission of the media stream. The system can continue sampling sets of video frames and if a share of frames or packets from a newly sampled set satisfies a restore threshold criterion (e.g., a share of encoded frames having a size smaller than a small-residual threshold value were to fall below the low small-packet threshold value), the system can restore the target bitrate to its original value.

In some implementations, the system can maintain a running average of video frame sizes generated by a video encoder and designate the upper limit value of the encoded frame size above which packet fragmentation would occur. The system can then determine, using the rolling average and the upper limit, the probability of a frame exceeding the upper limit value. If the probability exceeds a probability threshold value, the system can reduce the target bitrate of the media stream.

Aspects of the present disclosure result in technological advantages in improved performance of the media player of a client device and improved overall performance of the media platform. In particular, the aspects of the present disclosure enable a system to dynamically adjust the target bitrate of a media stream such that latency is reduced and/or overall streaming quality is improved. Additionally, the technology disclosed herein can include reducing the consumption of computational, memory, and bandwidth resources by the media platform by preventing reducing the number of packets transmitted and possibly retransmission in the event of a lost packet.

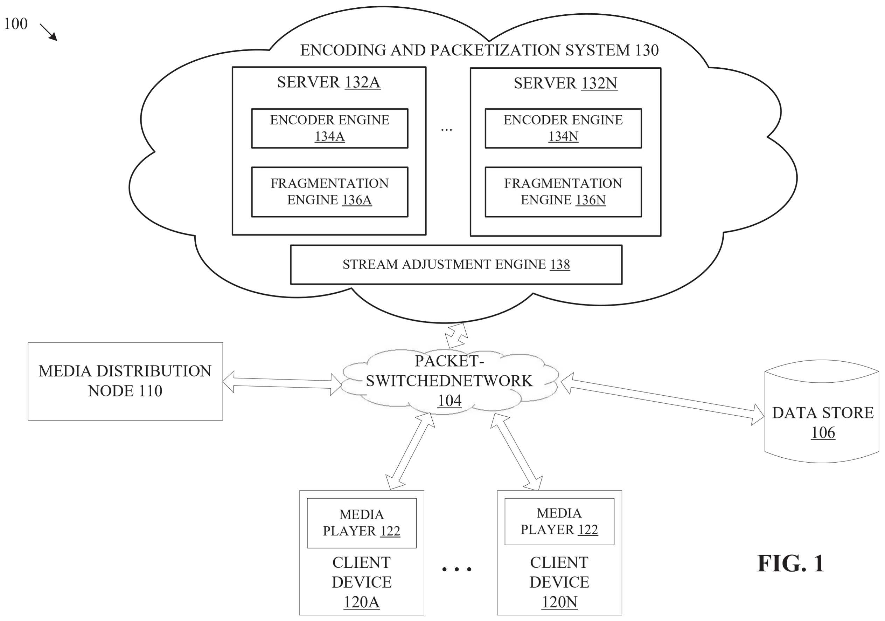

**FIG. 1** illustrates an example media distribution system 100 for authenticating content delivered in packet-switched networks, in accordance with at least one implementation. System 100 can include media distribution node 110, client device 120A-120N, and encoding and packetization system 130 connected to packet-switched network 104. Encoding and packetization system 130 can include server machines 132A-132N and stream adjustment engine 138. Packet-switched network 104 can include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

Media distribution node 110 can provide media data (e.g., a live media stream, media items such as video items, etc.) for transmission within encoding and packetization system 130. In particular, media distribution node 110 can transmit generated media data to one or more server machines 132A-132N of encoding and packetization system 130. In some implementations, media distribution node 110 can be part of encoding and packetization system 130. In some implementations, media distribution node 110 can be in a network different than encoding and packetization system 130. Media distribution node 110 can include one or more sources for the media data. For example, media distribution node 110 can be part of a cloud computing environment that provides media data to various entities, such as a video conferencing platform, a video broadcasting platform, or a content sharing platform. Upon receiving a connection from client devices 120A-120N, media distribution node 110 can provide (e.g., push) media data (such as, for example, individual frames of a media item) to the client devices 120A-120N via, for example, network 104 and/or encoding and packetization system 130.

Data store 106 can be a persistent storage that is capable of storing media items as well as data structures to tag, organize, and index the media items. Data store 106 can be hosted by one or more storage devices, such as main memory, magnetic or optical storage-based disks, tapes or hard drives, NAS, SAN, and so forth. In some implementations, data store 106 can be a network-attached file server, while in other implementations data store 106 can be some other type of persistent storage such as an object-oriented database, a relational database, and so forth, that can be hosted by media distribution node 110 or one or more different machines coupled to the media distribution node 110. In some implementations, data store 106 can be coupled to media distribution node 110 via packet-switched network 104.

Client devices 120A-120N can each include computing devices such as personal computers (PCs), laptops, dedicated video conferencing endpoints, mobile phones, smart phones, tablet computers, netbook computers, network-connected televisions, etc. In some implementations, client devices 120A-120N can also be referred to as "user devices." In some implementations, each client device 120A-120N can include a media player 122 (or media viewer). In some implementations, the media players 122 can be applications that allow users to play back, view, or upload media content, such as images, video items, web pages, documents, audio items, etc. For example, the media player 122 can be a web browser that can access, retrieve, present, or navigate content (e.g., web pages such as Hyper Text Markup Language (HTML) pages, digital media items, etc.) served by a web server. The media player 122 can render, display, or present the content (e.g., a web page, a media viewer) to a user. The media player 122 can also include an embedded media player (e.g., a Flash^{®} player or an HTML5 player) that is embedded in a web page (e.g., a web page that can provide information about a product sold by an online merchant). In another example, the media player 122 can be a standalone application (e.g., a mobile application, or native application) that allows users to playback digital media items (e.g., digital video items, digital images, electronic books, etc.). According to aspects of the present disclosure, the media player 122 can be an application for users to record, edit, and/or upload content for sharing on a media distribution node 110. As such, the media players 122 can be provided to the client devices 120A-120N by the content sharing platform (not shown). For example, the media players 122 can be embedded media players that are embedded in web pages provided by the content sharing platform. In another example, the media players 122 can be applications that are downloaded from a content sharing platform. In yet another example, the media players 122 can be the decoding and rendering components of a stand-alone video conferencing system.

In some implementations, media distribution node 110, server machines 132A-132N, and stream adjustment engine 138 can be one or more computing devices (such as a rackmount server, a router computer, a server computer, a personal computer, a mainframe computer, a laptop computer, a tablet computer, a desktop computer, central processing units (CPUs), etc.), data stores (e.g., hard disks, memories, databases), networks, software components, or hardware components that can be used to provide a user with access to media data (e.g., media items) or provide the media data to the user. In some implementations, media distribution node 110 can allow a user to consume, upload, search for, approve of ("like"), disapprove of ("dislike"), or comment on media items. Media distribution node 110 can also include a website (e.g., a webpage) or application back-end software that can be used to provide a user with access to the media items.

In some implementations of the disclosure, a "user" can be represented as a single individual. However, other implementations of the disclosure encompass a "user" being an entity controlled by a set of users and/or an automated source. For example, a set of individual users federated as a community in a social network can be considered a "user". In another example, an automated consumer can be an automated ingestion pipeline, such as a topic channel, of media distribution node 110.

In some implementations, media items are video items. A video item is a set of sequential image frames representing a scene in motion. For example, a series of sequential image frames can be captured continuously or later reconstructed to produce animation. Video items can be presented in various formats including, but not limited to, analog, digital, two-dimensional and three-dimensional video. Further, video items can include movies, video clips or any set of animated images to be displayed in sequence. In addition, a video item (or media item) can be stored as a video file that includes a video component and an audio component. The video component can refer to video data in a video coding format or image coding format (e.g., H.264 (MPEG-4 AVC), H.264 MPEG-4 Part 2, Graphic Interchange Format (GIF), WebP, etc.). The audio component can refer to audio data in an audio coding format (e.g., advanced audio coding (AAC), MP3, etc.). It can be noted GIF can be saved as an image file (e.g., .gif file) or saved as a series of images into an animated GIF (e.g., GIF89a format). It can be noted that H.264 can be a video coding format that is a block-oriented motion-compensation-based video compression standard for recording, compression, or distribution of video content, for example.

In some implementations, media item can be streamed, such as in a livestream or a real-time interactive video call, to one or more of client devices 120A-120N. It is be noted that "streamed" or "streaming" refers to a transmission or broadcast of content, such as a media item, where the received portions of the media item can be played back by a receiving device immediately upon receipt (within technological limitations) or while other portions of the media content are being delivered, and without the entire media item having been received by the receiving device. "Stream" can refer to content, such as a media item, that is streamed or streaming. A live-stream media item can refer to a live broadcast or transmission of a live event, where the media item is concurrently transmitted, at least in part, as the event occurs to a receiving device, and where the media item is not available in its entirety.

Encoding and packetization system 130 can include one or more nodes or edge servers, represented as server machines 132A-132N (generally referred to as "server(s) 132" herein). In some implementations, encoding and packetization system 130 includes a geographically distributed network of servers that work together to provide fast delivery of content. The network of servers are geographically distributed to provide high availability and high performance by distributing content or services based, in some instances, on proximity to client devices 120A-120N. The closer a server machine 132A-132N is to a client device 120A-120N, the faster the content can be delivered to the client device 120A-120N.

Each server machine 132A-132N can include a respective encoder engine 134A-134N and fragmentation engine 136A-136N. Encoder engine 134A-134N can encode media data by encoding each frame of a media stream. In particular, encoder engine 134A-134N can encode the frames of one or more media streams (or signals) related to the media data generated or provided by media distribution node 110. Encoder engine 134A-134N can include one or more encoders that encode a media stream in accordance with a set of encoder parameter settings. In some implementations, an encoder parameter setting can impact a decision made by the encoder during an encoding process. For example, an encoder parameter setting can impact a bitrate control (e.g., how many bits to allocate for a given frame) related to encoding a media stream, a number of type of reference frames of the media stream that are to be used to define future frames of the media stream, a type of frame to be used to compress the media stream, a mode related to an encoding process, and so forth. In some implementations, media distribution node 110 and/or client device 120A-120N can include, or be coupled to, an encoder and/or a decoder that is configured to decode an encoded media stream. Media distribution node 110 and/or client device 120A-120N can provide the encoded media streams as input to the encoder and/or the decoder, which can decode the encoded media streams. The decoded media streams can correspond to a generated or requested media item. Client device 120A-120N can provide the requested media item to a user of client device 120A-120N using the decoded media streams via, for example, media player 122.

Fragmentation engine 136A-136N can split an encoded frame into one or more multiple network packets. In some implementations, fragmentation engine 136A-136N can split a frame having the size that is greater than a transfer size threshold value. The transfer size threshold value can be the size of or a percentage of the MTU of encoding and packetization system 130, of a particular server 132 of encoding and packetization system 130, of another network (e.g., packet-switched network 104), etc. In some implementations, the transfer size threshold value can be set using the size of a network's MTU, the size of one or more headers used by one or more networks, the size of a payload, etc. In an illustrative example, in a network with a 1,492 byte MTU, the transfer size threshold value can be 1,200 bytes of payload. In response to fragmentation engine 136A-136N determining that the size of the encoded frame exceeds the transfer size threshold value, fragmentation engine 136A-136N can split the encoded frame into two or more packets. The number of packets the frames is split into can be determined using the size of the frame and the maximum payload size the network includes in each packet such that the payload size of each packet does not exceed the maximum payload size (e.g., two packets if the frame size is greater than 1,200 bytes but less than or equal to 2,400 bytes, three packets if the frame size is greater than 2,400 bytes but less than or equal to 3,600 bytes, etc.). As such, fragmentation engine 136A-136N splits the encoded packet into two or more packets with any remaining data portions being sent in the last packet (referred to as the "residual packet"). Each of the multiple packets of an encoded frame can include a respective header or space for other network components to add respective headers.

Stream adjustment engine 138 can perform aspects of the disclosure described herein. In particular, stream adjustment engine 138 can dynamically adjust a media stream's target bitrate to minimize packet fragmentation. The target bitrate can be a parameter provided to encoder engine 134A-134N, where the encoder engine 134A-134N may strive to achieve the target bitrate. In some implementations, stream adjustment engine 138 can periodically select a subset of (encoded) video frames from the media stream and determine how many frames in the subset are fragmented. Stream adjustment engine 138 can then compare the share of fragmented frames from the subset to a fragmentation threshold criterion (e.g., a threshold value). If the number of fragmented frames satisfied the fragmentation threshold criterion (e.g., is greater than a threshold value), stream adjustment engine 138 can then determine the size of the residual packets of each fragmented frame. Stream adjustment engine 138 then determines the share of these residual packets whose size satisfies a small-residual threshold criterion (e.g., residual packets with a size smaller than a threshold value). In an illustrative example, the small-residual threshold value can be one tenth of the network's MTU (e.g., 150 bytes in a 1,500 MTU network). If the share (number) of residual packets exceeds a high small-packet threshold (e.g., exceed a high threshold value), stream adjustment engine 138 can reduce the target bitrate of the media stream until the share of residual packets are maintained below a low small-packet threshold (e.g., a low threshold value). The low small-packet threshold value can be equal to or less than the high threshold value. Thus, packet fragmentation is reduced due to the number of residual packets being reduced.

In some implementations, stream adjustment engine 138 can continue sampling sets of video frames to determine whether to restore the media stream's target bitrate to its original value. In response to determining that a share of frames or packets from a newly sampled set satisfies a restore threshold criterion, stream adjustment engine 138 can restore the target bitrate to its original value. The restore threshold criterion can reflect the size of each frame in a sampled set being below a certain threshold value. The restore threshold criterion can be set to a value low enough that when the media stream's target bitrate is restored to its original value, additional packets will not be generated during fragmentation (or fewer packets will be generated).

In another implementation, stream adjustment engine 138 can maintain a running average of video frame sizes generated by server 132A-132N. Stream adjustment engine 138 can designate an upper limit value that reflects the desired bitrate target of the media stream. Using the running average and upper limit, stream adjustment engine 138 can determine the probability of a frame exceeding the upper limit value. The probability can be, for example, a percentage value. In response to the probability exceeding a probability threshold value, server 132A-132N can adjust (e.g., reduce) the target bitrate of the media stream.

Further to the descriptions above, a user can be provided with controls allowing the user to make an election as to both if and when systems, programs, or features described herein can enable collection of user information (e.g., information about a user's social network, social actions, or activities, profession, a user's preferences, or a user's current location), and if the user is sent content or communications from a server. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over what information is collected about the user, how that information is used, and what information is provided to the user.

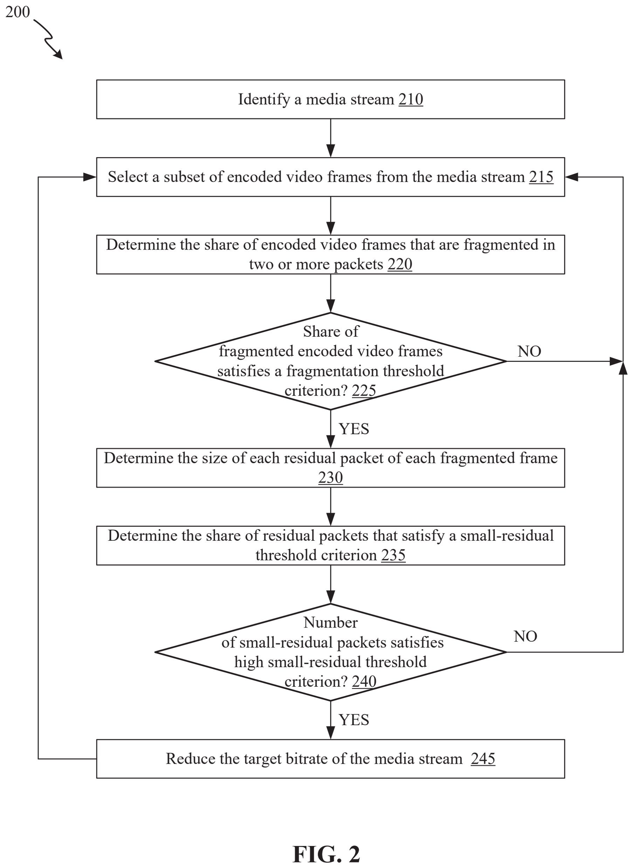

**FIG. 2** depicts a flow diagram of a method 200 for dynamically adjusting a media stream's target bitrate to minimize packet fragmentation, in accordance with implementations of the disclosure. The method is performed by processing logic that can include hardware (circuitry, dedicated logic, etc.), software (e.g., instructions run on a processing device), or a combination thereof. In some implementations, some or all of the operations of method 200 can be performed by one or more components of system 100 of **FIG. 1****.** In other implementations, one or more operations of method 200 can be performed by the stream adjustment engine 138 of encoding and packetization system 130, as described with respect to **FIG. 1****.** It can be noted that components described with respect to **FIG. 1** can be used to illustrate aspects of **FIG. 2****.**

For simplicity of explanation, method 200 of this disclosure is depicted and described as a series of acts. However, acts in accordance with this disclosure can occur in various orders and/or concurrently, and with other acts not presented and described herein. Furthermore, not all illustrated acts can be required to implement the method 200 in accordance with the disclosed subject matter. In addition, those skilled in the art will understand and appreciate that the method 200 could alternatively be represented as a series of interrelated states via a state diagram or events. Additionally, it should be appreciated that the method 200 disclosed in this specification is capable of being stored on an article of manufacture (e.g., a computer program accessible from any computer-readable device or storage media) to facilitate transporting and transferring such methods to computing devices. The term "article of manufacture," as used herein, is intended to encompass a computer program accessible from any computer-readable device or storage media.

At operation 210, the processing logic identifies a media stream. The media stream can be a media item transmitted from media distribution node 110 to one or more client devices 120A-120N. For example, the media item can be a live-streamed video or a real-time interactive video stream.

At operation 215, the processing logic selects a subset of video frames from the media stream. The subset of video frames can include a predetermined sequential number of frames that have been sent, by encoding and packetization system 130, to a client device 120A-120N for consumption. Each frame can be processed (via, for example, the encoding and packetization system 130) at a particular bitrate. The bitrate of each frame can fluctuate due to, for example, encoding methods, available bandwidth, platform settings, network connection, interference, etc.

At operation 220, the processing logic determines the share of video frames from the set that are split in two or more packets. In an example, the processing logic can count the packets for each frame, determine the number of packets using the size of each frame (e.g., by considering, for example, the maximum payload allowable per packet), using a computer function (e.g., ffprobe), etc.

At operation 225, the processing logic determines whether the share of fragmented video frames satisfies a fragmentation threshold criterion. The fragmentation threshold criterion can include, for example, a value used to determine whether a relatively significant number of frames are fragmented during transmission of the media item. Responsive to the share of fragmented frames failing to satisfy the fragmentation threshold criterion (e.g., the share of fragmented frames is less than or equal to a threshold value), the processing logic proceeds to operation 215 and selects a new subset of video frames. Responsive to the share of fragmented frames satisfying the fragmentation threshold criterion (e.g., the number of fragmented frames is greater than a threshold value), the processing logic proceeds to operation 230.

At operation 230, the processing logic determines the size of each residual packet of each fragmented frame. For example, the processing logic can measure or estimate the number of bytes that each residual packet has, identify the number of bytes in each residual packet using transmission metadata, etc.

At operation 235, the processing logic determines the share of residual packets that satisfy a small-residual threshold criterion. For example, the processing logic can determine how many of the residual packets have a size (e.g., byte size) smaller than a threshold value. Each residual packet that satisfies the small-residual threshold criterion can be referred to as a small-residual packet.

At operation 240, the processing logic determines whether the number of small-residual packets satisfies a high small-residual threshold criterion. The high small-residual threshold criterion can be a threshold value indicative of a relatively high number of small-residual packets being generated during the transmission of the media stream. Responsive to the processing logic determining that the number of small-residual packets fails to satisfy the high small-residual threshold criterion, the processing logic proceeds to operation 215 and selects a new subset of video frames. Responsive to the processing logic determining that the number of small-residual packets satisfies the high small-residual threshold criterion, the processing logic proceeds to operation 245.

At operation 245, the processing logic reduces the target bitrate of the media stream. In some implementations, the processing logic can reduce the target bitrate such that the share of residual packets is maintained below a low small-residual threshold. The low small-residual threshold can be set to a value that is less than and/or equal to the high threshold value. In some implementations, the processing logic can reduce the target bitrate by a predetermined value (e.g., by a bitrate value, a percentage value, etc.). Accordingly, the share of residual packets is reduced during a media stream.

The processing logic can continue sampling sets of video frames (e.g., proceed to operation 215 to select a new subset of video frames from the media stream) to determine whether to restore the target bitrate to its original value and/or whether to further reduce the target bitrate of the media stream. The processing logic can further reduce the target bitrate of the media stream using one or more operations of method 200. In some implementations, to determine whether to restore the target bitrate to its original value, processing logic can determine whether one or more subsequently sampled subsets of video frames satisfies a restore threshold criterion. For example, the processing logic can determine whether the size of one or more frames in the subset is below a certain threshold value. Responsive to the restore threshold criterion being satisfied, the processing logic can restore the target bitrate of the media stream to its original value.

In some instances, the encoding and packetization system 130 can transmit the media stream using multiple spatial and/or temporal layers. In particular, in video coding, temporal layering (also referred to as temporal scalability) is the option to decode only some of the frames in a video stream instead of the whole stream, thus allowing for scalability in quality. Specifically, this technique can be used to increase the frame rate, which can improve the perceived quality of the video. The temporal layering can be performed by predicting from a previous reconstructed picture in the reference layer. Each layer in temporal layering can increase the frame rate over the previous layer. For example, if a layer begins with 15 frames-per-second (fps), the subsequent layers can be increased to 30fps, 60fps, etc. Spatial layering, on the other hand, is a technique that adjusts the resolution of a video frame from one layer to the next, which is useful for adapting to different screen sizes and resolutions.

In some implementations, at least a portion of the reduced bitrate (e.g., a value reflecting at least a portion of the reduced bitrate) of the media stream can be reallocated from one layer to another layer. In particular, in instances where the media item is encoded into a stream having multiple spatial and/or temporal layers, the processing logic can reallocate the bitrate from a spatial and/or temporal layer(s) whose share of small residual packets satisfies (e.g., exceeds) the small-residual threshold criterion to one or more layers whose share of small residual packets fails to satisfy the satisfy a small-residual threshold criterion. If the reallocation of the bitrate causes a layer, that previously had a share of small residual packets below the small-residual threshold criterion, to exceed this threshold, the bitrate will not be allocated to that layer (thus preventing that layer from increasing packet fragmentation). If no layer can receive reallocated bitrate without the fraction of small residual packets exceeding the small-residual threshold criterion, the bitrate from the layer that exceeds the small-residual threshold criterion is reduced without a bitrate reallocation.

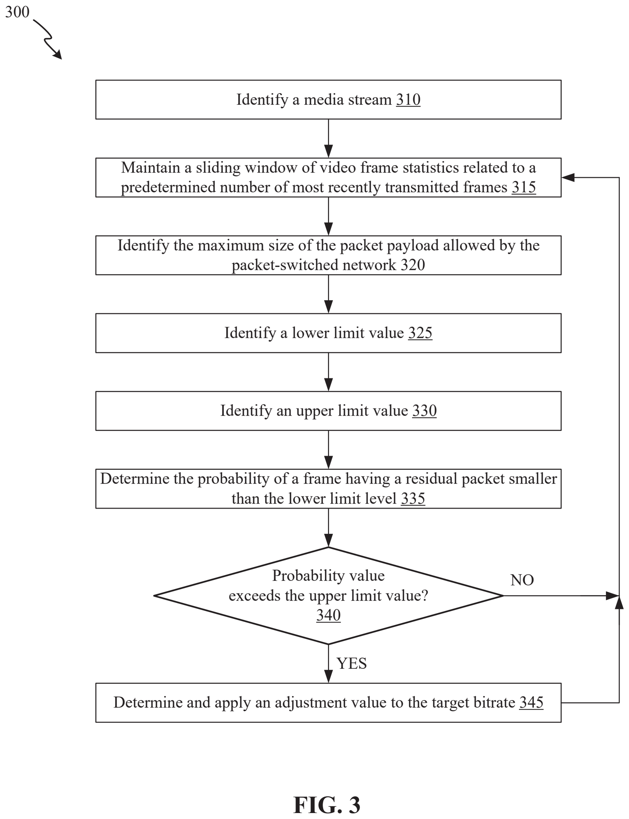

**FIG. 3** depicts a flow diagram of another method 300 for dynamically adjusting a media stream's target bitrate to minimize packet fragmentation, in accordance with implementations of the disclosure. The method is performed by processing logic that can include hardware (circuitry, dedicated logic, etc.), software (e.g., instructions run on a processing device), or a combination thereof. In some implementations, some or all of the operations of method 300 can be performed by one or more components of system 100 of **FIG. 1****.** In other implementations, one or more operations of method 300 can be performed by the stream adjustment engine 138 of encoding and packetization system 130, as described with respect to **FIG. 1****.** It can be noted that components described with respect to **FIG. 1** can be used to illustrate aspects of **FIG. 3****.**

For simplicity of explanation, method 300 of this disclosure is depicted and described as a series of acts. However, acts in accordance with this disclosure can occur in various orders and/or concurrently, and with other acts not presented and described herein. Furthermore, not all illustrated acts can be required to implement the method 300 in accordance with the disclosed subject matter. In addition, those skilled in the art will understand and appreciate that the method 300 could alternatively be represented as a series of interrelated states via a state diagram or events. Additionally, it should be appreciated that the method 300 disclosed in this specification is capable of being stored on an article of manufacture (e.g., a computer program accessible from any computer-readable device or storage media) to facilitate transporting and transferring such methods to computing devices. The term "article of manufacture," as used herein, is intended to encompass a computer program accessible from any computer-readable device or storage media.

At operation 310, the processing logic identifies a media stream. The media stream can be a media item transmitted from media distribution node 110 to one or more client devices 120A-120N, such as a live-streamed video.

At operation 315, the processing logic maintains a sliding window of video frame statistics related to a predetermined number of most recently transmitted frames. The statistics can include the (byte) size of each frame within the sliding window, the average size of all of the frames within the window (e.g., the average frame size of the 10 most recently transmitted frames), the variance (measure of how far a set of numbers is spread out from their average value) of the frames in the sliding window, etc. The statistics can be continuously updated using newly transmitted frames as the "window slides." For example, the statistics can be updated with data related to a most recently transmitted frame (or set of frames) while data from the oldest frame (or set of frames) within the sliding window is removed.

At operation 320, the processing logic identifies the maximum size of the packet payload allowed by the packet-switched network. In particular, in order to accommodate the headers and possible overrun, the size of the packet payload can be limited to a target value that is less than the MTU size (e.g., the maximum of 1,200 bytes of payload can be used with a 1,492 MTU).

At operation 325, the processing logic identifies a lower limit value. The lower limit value can reflect a size below which a residual packet is identified as a small residual packet. In an illustrative example, the lower limit value can be ten percent of the maximum size of the packet payload (thus, packets having a size less than ten percent of the maximum size are identified as small residual packets).

At operation 330, the processing logic identifies an upper limit value. The upper limit value can reflect an acceptable probability of a fragmented frame including a small residual packet. In an illustrative example, the upper limit value can be twenty percent (e.g., it is acceptable for up to twenty percent of fragmented frames to include a small residual packet.

At operation 335, the processing logic determines the probability of the encoder engine generating a subsequent frame having a residual packet smaller than the lower limit value. The processing logic can determine this probability value using, for example, the statistics, the current target bitrate, and upper limit value. In some implementations, the probability can reflect the percentage of fragmented frames within the sliding window that included a residual packet that was below the lower limit value. For example, the processing logic can determine that three of ten fragmented frames included a residual packet that was lower than the lower limit value, thus the probability of the encoder engine generating a fragmented frame with a small residual packet is thirty percent.

At operation 340, the processing logic determines whether the probability value exceeds the upper limit value. Responsive to the processing logic determining that the probability fails to exceed the upper limit value, the processing logic proceeds to operation 315 without adjusting the target bitrate of the media stream and updates the sliding window with new frame data. Responsive to the processing logic determining that the probability exceeds the upper limit value, the processing logic proceeds to operation 345.

At operation 345, the processing logic determines and applies an adjustment value to the target bitrate. The adjustment value can be determined using, for example, a formula, a heuristics-based method, an artificial intelligence model, etc. The adjustment value can reflect a change to the target bitrate so that the probability of generating a residual packet smaller than the lower limit value is less than the upper limit value. In particular, the processing logic determines whether to increase the target bitrate or decrease the target bitrate such that the probability no longer exceeds the upper limit value.

In some implementations, the processing logic can determine to increase the target bitrate by identifying a higher target bitrate value that satisfies one or more conditions, such as, for example, whether a probability value related to higher target bitrate value would exceed the upper limit value, whether bitrate can be reallocated from other spatial and/or temporal layers (e.g., whether another layer is streaming at a reduced bitrate and can, thus, reallocate its unused bitrate), whether available payload headroom is available (e.g., whether frames without a small residual packet have enough available payload space without requiring the generating of another packet for the frame), etc.

In some implementations, the processing logic can determine to reduce the target bitrate of the media stream. In particular, the processing logic can reduce the target bitrate such that the probability value for a subsequent frame(s) is maintained below the upper value limit..

The processing logic can select whether the adjustment is positive or negative (e.g., whether to increase or decrease the target bitrate) based on a predefined set of rules. For example, in some implementations, the processing logic can prioritize a positive adjustment if possible, and apply a negative adjustment if unable to apply a positive adjustment. In other implementations, the processing logic can elect to only apply a negative adjustment (thus not performing any of calculations related to a positive adjustment). The processing logic can then proceed to operation 315 and update the sliding window with new frame data.

In some implementations, the processing logic can continue maintaining the sliding window to determine whether to restore the target bitrate to its original value and/or whether to further reduce the target bitrate of the media stream. The processing logic can further reduce the target bitrate of the media stream using one or more operations of method 300. In some implementations, to determine whether to restore the target bitrate to its original value, the processing logic can determine whether size of a number of frames in the sliding window, the average size of the frames in the sliding window, or any other statistics of the sliding window satisfy a certain threshold criterion. This threshold criterion can be, for example, whether the size of one or more frames or the average size of the frames in the sliding window fall below a certain threshold value. Responsive to the restore threshold criterion being satisfied, the processing logic can restore the target bitrate of the media stream to its original value.

In an illustrative example, the target bitrate can be set to 200 kilobits per second (kbps) and 10 frames per second (fps). As such, the encoder should generate frames with a size of 2,500 bytes. The maximum payload size per packet can be set to 1,200 bytes, the small residual size threshold can be set to 50 bytes (i.e., approximately 4.2% of 1,200 bytes), and the upper limit is set to ten percent. Assuming the video frame statistics indicate the following regarding frame size probability: Ten percent of frames are 100 bytes or more below the target bitrate, twenty percent of frames are between 99 bytes and 50 bytes below the target bitrate, forty percent of frames are 49 bytes below the target bitrate to 49 bytes above the target bitrate, twenty percent of frames are between 99 bytes and 50 bytes above the target bitrate, and ten percent of frames are 100 bytes or more above the target bitrate. The nearest frame sizes where the probability value exceeds the upper limit value are frames that are 2,400-2,450 bytes (i.e., 2 full packets and one small residual packet) and frames that are 3,600-3,650 bytes (i.e., 3 full packets and one small residual packet). Since the statistics indicate that twenty percent of frames are expected to exceed the upper limit value (i.e., twenty percent of the frames between 99 bytes and 50 bytes below the target bitrate, which yields frames sizes between 2,400-2,450 bytes), the processing logic can determine whether to increase the target bit rate or decrease the target bit rate. Setting the target bitrate size to 2,300 would result in the probability of exceeding 2,400 bytes to ten percent, which is acceptable according to the upper limit value. Setting the target bitrate to 2,550 bytes would result in the probability of a frame size being below 2,500 to ten precent, which is also acceptable. Thus, the processing logic can determine whether to set the target bitrate to the higher value or the lower value based on one or more conditions, as discussed above.

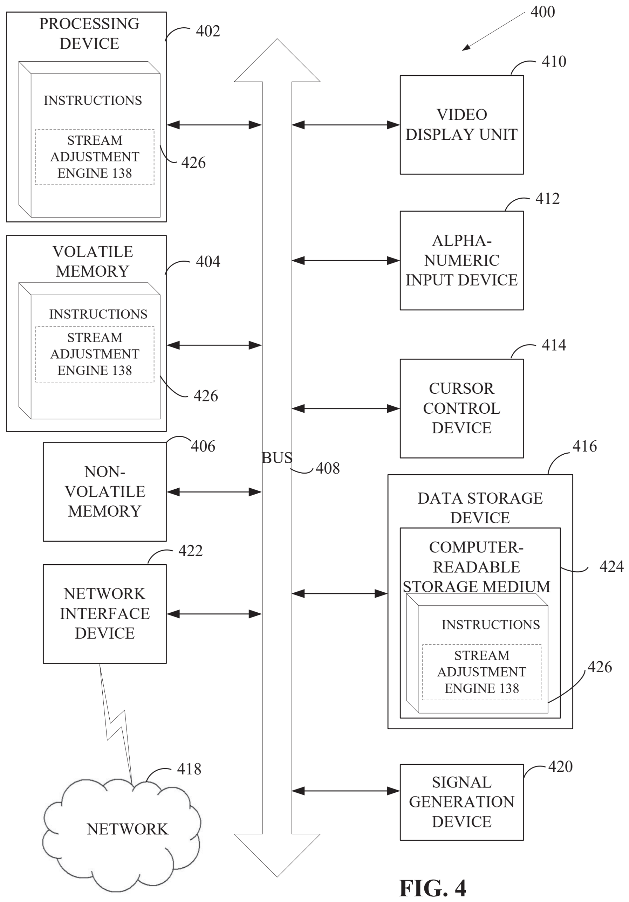

**FIG. 4** is a block diagram illustrating an exemplary computer system 400, in accordance with an implementation of the disclosure. The computer system 400 executes one or more sets of instructions that cause the machine to perform any one or more of the methodologies discussed herein. Set of instructions, instructions, and the like can refer to instructions that, when executed by computer system 400, cause computer system 400 to perform one or more operations of distribution server 138, and/or content sharing platform 120 (not shown). The machine can operate in the capacity of a server or a client device in client-server network environment, or as a peer machine in a packet-switched (or distributed) network environment. The machine can be a personal computer (PC), a tablet PC, a set-top box (STB), a personal digital assistant (PDA), a mobile telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute the sets of instructions to perform any one or more of the methodologies discussed herein.

The computer system 400 includes a processing device 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a data storage device 416, which communicate with each other via a bus 408.

The processing device 402 represents one or more general-purpose processing devices such as a microprocessor, central processing unit, or the like. More particularly, the processing device 402 can be a complex instruction set computing (CISC) microprocessor, reduced instruction set computing (RISC) microprocessor, very long instruction word (VLIW) microprocessor, or a processing device implementing other instruction sets or processing devices implementing a combination of instruction sets. The processing device 402 can also be one or more special-purpose processing devices such as an application specific integrated circuit (ASIC), a field programmable gate array (FPGA), a digital signal processor (DSP), network processor, or the like. The processing device 402 is configured to execute instructions of the system architecture 100 and stream adjustment engine 138 for performing the operations discussed herein.

The computer system 400 can further include a network interface device 422 that provides communication with other machines over a network 418, such as a local area network (LAN), an intranet, an extranet, or the Internet. The computer system 400 also can include a display device 410 (e.g., a liquid crystal display (LCD) or a cathode ray tube (CRT)), an alphanumeric input device 412 (e.g., a keyboard), a cursor control device 414 (e.g., a mouse), and a signal generation device 420 (e.g., a speaker).

The data storage device 416 can include a non-transitory computer-readable storage medium 424 on which is stored the sets of instructions of the system architecture 100, content sharing platform 120, or of distribution server 138 embodying any one or more of the methodologies or functions described herein. The sets of instructions of the system architecture 100, content sharing platform 120, or of distribution server 138 can also reside, completely or at least partially, within the main memory 404 and/or within the processing device 402 during execution thereof by the computer system 400, the main memory 404 and the processing device 402 also constituting computer-readable storage media. The sets of instructions can further be transmitted or received over the network 418 via the network interface device 422.

While the example of the computer-readable storage medium 424 is shown as a single medium, the term "computer-readable storage medium" can include a single medium or multiple media (e.g., a centralized or distributed database, and/or associated caches and servers) that store the sets of instructions. The term "computer-readable storage medium" can include any medium that is capable of storing, encoding or carrying a set of instructions for execution by the machine that cause the machine to perform any one or more of the methodologies of the disclosure. The term "computer-readable storage medium" can include, but not be limited to, solid-state memories, optical media, and magnetic media.

In the foregoing description, numerous details are set forth. It will be apparent, however, to one of ordinary skill in the art having the benefit of this disclosure, that the disclosure can be practiced without these specific details. In some instances, well-known structures and devices are shown in block diagram form, rather than in detail, in order to avoid obscuring the disclosure.

Some portions of the detailed description have been presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It can be borne in mind, however, that all of these and similar terms are to be associated with the appropriate physical quantities and are merely convenient labels applied to these quantities. Unless specifically stated otherwise, it is appreciated that throughout the description, discussions utilizing terms such as "generating", "providing", "adjusting", "receiving", "canceling", or the like, refer to the actions and processes of a computer system, or similar electronic computing device, that manipulates and transforms data represented as physical (e.g., electronic) quantities within the computer system memories or registers into other data similarly represented as physical quantities within the computer system memories or registers or other such information storage, transmission or display devices.

The disclosure also relates to an apparatus for performing the operations herein. This apparatus can be specially constructed for the required purposes, or it can include a general-purpose computer selectively activated or reconfigured by a computer program stored in the computer. Such a computer program can be stored in a computer readable storage medium, such as, but not limited to, any type of disk including a floppy disk, an optical disk, a compact disc read-only memory (CD-ROM), a magnetic-optical disk, a read-only memory (ROM), a random access memory (RAM), an erasable programmable read-only memory (EPROM), an electrically erasable programmable read-only memory (EEPROM), a magnetic or optical card, or any type of media suitable for storing electronic instructions.

The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims can generally be construed to mean "one or more" unless specified otherwise or clear from context to be directed to a singular form. Moreover, use of the term "an implementation" or "one implementation" throughout is not intended to mean the same implementation or implementations unless described as such. The terms "first," "second," "third," "fourth," etc. as used herein are meant as labels to distinguish among different elements and can not necessarily have an ordinal meaning according to their numerical designation.

For simplicity of explanation, methods herein are depicted and described as a series of acts or operations. However, acts in accordance with this disclosure can occur in various orders and/or concurrently, and with other acts not presented and described herein. Furthermore, not all illustrated acts can be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term article of manufacture, as used herein, is intended to encompass a computer program accessible from any computer-readable device or storage media.

In additional implementations, one or more processing devices for performing the operations of the above-described implementations are disclosed. Additionally, in implementations of the disclosure, a non-transitory computer-readable storage medium stores instructions for performing the operations of the described implementations. Also in other implementations, systems for performing the operations of the described implementations are also disclosed.

It is to be understood that the above description is intended to be illustrative, and not restrictive. Other implementations will be apparent to those of skill in the art upon reading and understanding the above description. The scope of the disclosure can, therefore, be determined with reference to the appended claims, along with the full scope of equivalents to which such claims are entitled.

## Claims

1. A method, comprising:
identifying, by a processor, a media stream comprising a sequence of encoded video frames;
estimating, in the sequence of video frames, a share of video frames that are fragmented into respective pluralities of network packets, wherein each plurality of network packets comprises a network packet having a size below a predefined packet threshold size;
determining whether the share exceeds a predefined threshold value; and
responsive to determining that the share exceeds a predefined threshold value, reducing a target bitrate of the video stream.

2. The method of claim 1, further comprising:
determining frame size data associated with a sequence of video frames from the media item;
responsive to determining that the frame size data satisfies a restore threshold value, restoring the target bitrate of the video stream.

3. The method of claim 1, further comprising:
responsive to reducing the target bitrate of the video stream, verifying that the share of residual packets falls below a low small-residual threshold value.

4. The method of claim 3, wherein the low small-residual threshold value is less than the predefined threshold value.

5. The method of claim 1, further comprising:
responsive to reducing the target bitrate of the video stream, increasing a bitrate associated with a temporal layer or spatial layer of the media stream.

6. The method of claim 1, wherein the predefined packet threshold size is determined based on a size of a maximum transmission unit (MTU).

7. The method of claim 1, wherein estimating the share of video frames is performed in response to determining that the sequence of video frames comprises a share of fragmented video frames that satisfies a fragmentation threshold criterion.

8. A system comprising:
a memory; and
a processing device coupled to the memory device, the processing device to perform operations comprising:
identifying a media stream comprising a sequence of encoded video frames;
estimating, in the sequence of video frames, a share of video frames that are fragmented into respective pluralities of network packets, wherein each plurality of network packets comprises a network packet having a size below a predefined packet threshold size;
determining whether the share exceeds a predefined threshold value; and
responsive to determining that the share exceeds a predefined threshold value, reducing a target bitrate of the video stream.

9. The system of claim 8, wherein the operations further comprise:
determining frame size data associated with a sequence of video frames from the media item;
responsive to determining that the frame size data satisfies a restore threshold value, restoring the target bitrate of the video stream.

10. The system of claim 8, wherein the operations further comprise:
responsive to reducing the target bitrate of the video stream, verifying that the share of residual packets falls below a low small-residual threshold value.

11. The system of claim 10, wherein the low small-residual threshold value is less than the predefined threshold value.

12. The system of claim 8, wherein the operations further comprise:
responsive to reducing the target bitrate of the video stream, increasing a bitrate associated with a temporal layer or spatial layer of the media stream.

13. The system of claim 8, wherein the predefined packet threshold size is determined based on a size of a maximum transmission unit (MTU).

14. The system of claim 8, wherein estimating the share of video frames is performed in response to determining that the sequence of video frames comprises a share of fragmented video frames that satisfies a fragmentation threshold criterion.

15. A non-transitory computer-readable medium comprising instructions that, responsive to execution by a processing device, cause the processing device to perform operations according to the method of any one of claims 1 to 7.
